Europäisches Patentamt

(19) European Patent Office

Office européen des brevets

(11) Publication number: **0 183 477**

**B1**

(12) **EUROPEAN PATENT SPECIFICATION**

(45) Date of publication of patent specification: **24.01.90**

(51) Int. Cl.⁵: **F 16 J 15/40**

(21) Application number: **85308428.3**

(22) Date of filing: **20.11.85**

(54) **Coaxial, multiple-shaft ferrofluid seal apparatus.**

(30) Priority: **20.11.84 US 673545**
**20.11.84 US 673550**

(43) Date of publication of application:
**04.06.86 Bulletin 86/23**

(45) Publication of the grant of the patent:
**24.01.90 Bulletin 90/04**

(84) Designated Contracting States:
**BE DE FR GB NL**

(56) References cited:
**EP-A-0 018 791**
**DE-A-2 717 660**

(73) Proprietor: **Ferrofluidics Corporation**
**40 Simon Street**
**Nashua New Hampshire 03061 (US)**

(72) Inventor: **Higgins, Donald W.**
**8 Nova Road**
**Nashua New Hampshire 03060 (US)**
Inventor: **Raj, Kuldip**
**11 Christina Road**
**Merrimack New Hampshire, 03054 (US)**
Inventor: **Gowda, Hanumaiah L.**
**35 Congress Street Apartment 15**
**Nashua New Hampshire (US)**

(74) Representative: **Slight, Geoffrey Charles et al**
**Graham Watt & Co. Riverhead**
**Sevenoaks Kent TN13 2BN (GB)**

Courier Press, Leamington Spa, England.

## Description

The present invention relates to coaxial multiple-shaft ferrofluid seal apparatus.

Ferrofluid seals for the sealing of single rotary drive shafts either through the use of a single or multiple stage ferrofluid O-ring seal is a well founded and accepted technology. The effective sealing of two or more coaxial drive shafts in a single housing is quite difficult. Historically, the solution to coaxial shaft sealing has been to mount physically one complete seal assembly inside another in order to de-couple the multiple magnetic structures. This approach to ferrofluid sealing of coaxial multiple shafts leads to an excessively large overall assembly which is quite cumbersome, particularly in use in small coaxial shaft diameters. Ferrofluid seals on coaxial, multiple-shaft elements are most desirable since such ferrofluid seals reduce wear on the sealing elements, provide for low drag torque, and may be designed for long ferrofluid seal life.

Typically, coaxial, multiple-shaft apparatus requiring effective sealings are used, for example, in semiconductor processing equipment, such as in sputtering assemblies for the etching or depositing onto a semiconductor wafer, and wherein a shutter, that is a plate with a hole, must be rotated to open and expose a target to a semiconductive wafer on a rotatable table below the target so that the rotating shutter is between the target and the table with the wafer. Another application for coaxial, multiple-shaft devices is for example manipulation in certain high-vacuum analysis equipment, such as a goniometer, or for the use of X-ray equipment for crystallographic studies. Coaxial seals may be used with other devices wherein an effective seal is required, typically between a sub-atmospheric and an atmospheric or super-atmospheric environment, and the seal is required between coaxial, multiple-shaft elements extending between the environments.

Thus, a seal apparatus for the hermetic sealing of the rotary motion of two or more coaxial drive shaft elements and for the independent rotation of the drive shafts in a low cost, compact design employing a ferrofluid seal is desirable.

In DE—A—2,717,660 there is described a magnetic fluid seal for a single rotary or reciprocating shaft. In order to mitigate the effects of friction heat on the magnetic susceptibility of the magnetic fluid, which decreases with rising temperature, a wall element of heat-conducting material coaxial with the shaft sub-divides the sealant magnetic fluid whereby the contact surface between the fluid and heat conducting components is increased, by which means the conveyance of heat away from the fluid is improved.

The present invention is a coaxial, multiple-shaft ferrofluid seal apparatus comprising a housing, within the housing a plurality of coaxial elements of which one is a central drive shaft element and the other or others of which extend about the central drive shaft element, and a single magnet means providing for at least one ferrofluid O-ring seal extending about each one of the coaxial elements and sealing a radial gap defined at the radially inward side by the element characterised in that said other of said coaxial elements or each of said others of said coaxial elements is a drive shaft element capable of transmitting a drive independently of said central drive shaft element and any other of said drive shaft elements.

Thus, a coaxial, multiple-shaft ferrofluid seal apparatus of the present invention provides a multiple-shaft coaxial unit with a single magnetic structure or a single source of magnetic flux for all of the sealing elements within the seal apparatus.

The employment of a single annular permanent magnet as a common source of magnetic flux for all ferrofluid seals eliminates the need for multiple magnetic structures and the magnetic shielding between them which is required in the prior art, which requirements are common when mounting one seal inside another in a concentric manner.

A coaxial, multiple-stage seal apparatus of the present invention may employ at least one coaxial drive shaft element which includes, and is characterized by, a shaft section composed of a non-magnetically permeable material, such as, for example, bronze or stainless steel series 300, and which is positioned between magnetically permeable shaft sections composed of a magnetically permeable material, such as stainless steel series 400. Such a coaxial drive shaft element composed of magnetically and non-magnetically permeable shaft sections is designed to permit the magnetic flux from the common magnet source to flow in the desired magnetic flux path and to provide a closed flux loop, so as to retain the ferrofluid as a liquid ferrofluid O-ring seal about the central shaft and one or more coaxial drive shafts.

The central drive shaft employed in a seal apparatus of the present invention may be composed of a magnetically permeable or a non-magnetically permable material. Where the shaft is composed of a magnetically permeable material, then the closed flux lines may pass through the shaft element to complete the closed magnetic flux circuit. Where the central drive shaft is composed of a non-magnetically permeable material, then a magnetically permeable pole block structure statically sealed to the central drive shaft may be employed in order to complete the closed magnetic flux circuit or a portion of the central drive shaft length may be composed of a magnetically permeable material to close this loop.

The sealed drive shafts may be composed within a non-magnetically permeable housing or a magnetically permeable housing, the housing being non-magnetically shielded.

The common magnetic source is conveniently composed of an annular permanent magnet and generally one, or preferably two, pole pieces in a magnetic flux relationship with the permanent magnet at the one and the other end, the pole pieces at the one end extending into a close, non-contacting relationship with the outer surface of a coaxial drive shaft element and the magnetically permeable drive shaft section of the shaft element to form a radial gap wherein ferrofluid may be retained therein to provide a ferrofluid seal.

A ferrofluid seal apparatus of the present invention will comprise a plurality of bearing means, such as ball bearing means, to provide support for the independent rotary motion of the central and the coaxial drive shafts.

The common permanent magnet of the magnet source may be comprised of any magnetic material, for example an Alnico No. 5 or a Sm—Co magnetic metal, or other strongly magnetic material.

The ferrofluid is typically ferrofluid which is generally employed for vacuum-type operation and may have a viscosity ranging from about 100 to 450 cps (100 to 450 mPa.s.) at 27°C and typically to 300 to 400 cps (300 to 400 mPa.s) and having a saturation magnetization, for example of 200 to 1000 gauss (0.02 to 0.01 tesla), and more specifically 300 to 450 gauss (0.03 to 0.045 tesla).

The ferrofluid exclusion seals formed about the central drive shaft and/or each coaxial drive shaft element in an apparatus of the present invention may be typical exclusion seals, that is single-stage seals on each pole piece, but more typically and preferably, they are multiple-stage seals of defined pressure capacity, e.g. greater than 15 psi $(0.1035 \times 10^6$ Pa), that is a plurality of separate, spaced apart, ferrofluid O-ring seals under each pole piece or magnetically permeable shaft section, formed by a plurality of knife edges or ridges either in the other end of the pole piece or on the magnetically permeable section of the shaft or the pole block and as shown for example in U.S. Patent 3,620,584.

A coaxial, multiple-shaft ferrofluid seal apparatus of the present invention thereby provides for hermetic sealing by the employment of ferrofluid O-rings for the rotary motion of two or more coaxial drive shafts in the seal apparatus and also provides for the independent rotation of the shaft in a compact design.

A seal apparatus of the present invention is particularly useful in semiconducting processing equipment wherein the central and coaxial drive shafts extend into a sub-atmospheric environment to provide for separate rotary motion within that environment of the central and coaxial shaft(s).

A typical embodiment of coaxial, multiple-stage ferrofluid seal apparatus of the present invention includes two or more coaxial drive shafts, a non-magnetic housing and a magnetic structure with each shaft, except for a magnetically permeable central inner shaft, made up of three axial drive shaft sections, namely a magnetically permeable section, a non-magnetically permeable section, generally placed directly beneath the end of the permanent magnet in the magnetic structure, and another magnetic section. The non-magnetic shaft section is sandwiched between the first and second magnetic sections of the drive shaft. An annular axially polarized, permanent magnet, and pole pieces are secured to the inner cylindrical wall surface of the non-magnetic housing. The coaxial drive shaft and the central drive shaft form a series of radial gaps wherein ferrofluid may be retained to form a series of ferrofluid O-ring seals in the single magnetic flux path in the seal apparatus through the pole pieces and then through each of the coaxial shaft elements, as well as the central drive shaft.

The drive shaft is magnetically permeable and acts as the first stage of the return path of the magnetic flux, and the return magnetic flux would be through each successive coaxial drive shaft outwardly through the magnetically permeable sections of the shaft. The ingoing and outcoming magnetic flux paths back to the magnet would be separated axially by the non-magnetically permeable shaft section in each of the coaxial drive shafts. This embodiment thus provides for a ferrofluid sealing of a plurality of coaxial drive shafts, where the central drive shaft is magnetically permeable and employing a single annular permanent magnet assembly to form ferrofluid sealing and which permits independent rotation of the sealed drive shafts and in a compact design.

In other embodiments wherein the central drive shaft is a non-magnetically permeable shaft, the use of a common magnetic source and a coaxial drive shaft, other than the central drive shaft, having a non-magnetic section sandwiched between two magnetic sections is still employed; however, the return flux path is provided by the use of a magnetically permeable pole block structure statically sealed and secured to the central, non-magnetically permeable drive shaft to provide a flux path.

In a still further embodiment, also where the central drive shaft is composed of a non-magnetically permeable material, the pole block may be employed statically sealed and secured to the non-magnetically permeable central shaft and a magnetically permeable pole block may also be sealed and secured statically to the interior wall or adjacent to the non-magnetically permeable housing and the common magnet structure. In this embodiment, the annular permanent magnet with the pole piece secured is made part of an intermediate coaxial drive shaft element so that the magnetic flux path flows from the magnet in the drive shaft element outwardly and inwardly to provide two closed-loop magnetic flux paths through the magnetically permeable pole block structures adjacent about the central drive shaft and about the inner wall of the housing.

Still further embodiments of coaxial, multiple-shaft ferrofluid apparatus of the present invention employ a radially polarized permanent magnet.

Thus, a coaxial, multiple-shaft ferrofluid seal apparatus of the present invention provides, e.g. a multiple-shaft coaxial unit with a single radially polarized magnetic structure acting as a single source of magnetic flux for all of the sealing elements within the seal apparatus.

The single radially polarized magnetic structure may provide one or two closed flux loops, so as to retain the ferrofluid as a liquid ferrofluid O-ring seal about one or more coaxial drive shafts.

The annular, radially polarized permanent magnet may have an annular magnetically permeable, e.g. metal, insert or sleeve secured to the outer diameter of the radially polarized magnet and in a magnetic flux relationship with the permanent magnet. The insert at each end of the outer diameter then extends into a close, non-contacting relationship with the inner surface of a coaxial drive shaft element and with a magnetically permeable shaft section of the shaft element to form at least one, and preferably a plurality of radial gaps wherein ferrofluid may be retained therein to provide a ferrofluid O-ring seal with the inner surface of the coaxial drive shaft.

The annular insert may be secured to and about the outer or inner diameter of the radially polarized magnet, while the permanent magnet is statically secured and sealed to the inner or outer diameter of a coaxial drive shaft.

This ferrofluid seal apparatus of the present invention may also comprise a plurality of magnetically permeable bearing means, such as ball bearing means, generally a pair for each drive shaft and on either side of a radially polarized permanent magnet to provide support for the independent rotary motion of the central and the coaxial drive shafts and for providing a flux path or paths for the magnetic flux circuit or circuits.

Thus, typically there is also provided a coaxial, multiple-stage seal apparatus comprising a central magnetically permeable drive shaft and a magnetically permeable housing both to provide a return path for a magnet flux circuit. The central drive shaft is surrounded by one or more coaxial drive shafts, which coaxial drive shafts are each characterized by a central magnetically permeable section and non-magnetically permeable inserts or insulators on either side of the central section and magnetically permeable sections on each side of the inserts or insulators so that the central and other magnetically permeable coaxial drive shaft sections may serve as a magnetic flux path. The seal apparatus includes an annular radially polarized permanent magnet statically sealed and secured to the inner or outer diameter of a coaxial drive shaft and includes an inner magnetically permeable insert secured to the other inner or outer diameter of the permanent magnet. The insert includes raised sections at each end to act as pole pieces which extend into a close, non-contacting relationship with the surface of the coaxial drive shaft. The end pole pieces have a plurality of ridges or knife-like edges to form a multiple stage ferrofluid seal. A magnetically permeable pole block structure also with raised ends to act as pole piece elements is statically sealed and secured to the central drive shaft and to and about each of the coaxial drive shafts to be sealed and to the interior surface of the housing to form corresponding multiple-step seals between the inner surface of the first coaxial drive shaft and the outer surface of the largest coaxial drive shaft in the housing. The coaxial drive shafts are supported by a pair of magnetically permeable rotary bearings such as ball bearings on either side of the permanent magnet and the pole block structures to provide a magnetic flux path through the bearings. The bearings are magnetically insulated by the use of annular ring-like non-magnetically permeable spacers adjacent to each side of the permanent magnet and the pole block structures.

In this seal apparatus of the invention, the magnetic flux path may be on only one side, but preferably on both sides of the permanent magnet to form two separate closed-loop flux circuits. The magnetic flux circuit passes from the single radially polarized permanent magnet secured, for example, to the outer surface of the first coaxial drive shaft, through the raised sections of the insert, the ferrofluid O-ring, the central magnetically permeable shaft section, the ferrofluid O-ring on the outer diameter of the second coaxial drive shaft, the one leg or pole piece of the pole block structure, through the housing and returning through the insulated bearing to the central drive shaft and back to the permanent magnet through the pole block structure on the central drive shaft and the ferrofluid O-rings on the inner surface of the first coaxial shaft.

The ferrofluid may be used to lubricate the bearings which results in a reduction in contaminants entering a protected vacuum system and low drag for the seal operation.

Specific embodiments of the present invention will now be described for the purposes of illustration only and with reference to the accompanying drawings in which:—

Fig. 1 is a sectional, schematic illustration of a coaxial ferrofluid seal apparatus of the invention;

Fig. 2 is a perspective, half-sectional view of a portion of a coaxial shaft which is employed in Fig. 1;

Fig. 3 is a sectional, schematic illustration of another embodiment of a coaxial ferrofluid seal apparatus of the invention;

Fig. 4 is a sectional, schematic illustration of a further embodiment of a coaxial ferrofluid seal apparatus of the invention; and

Fig. 5 is a sectional, schematic illustration of a still further embodiment of a coaxial ferrofluid seal apparatus of the invention.

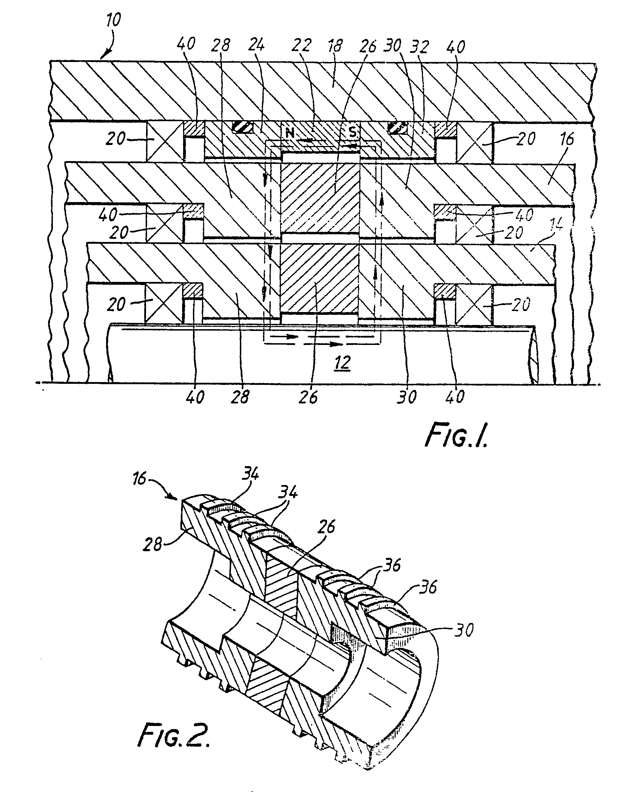

With reference to the accompanying drawings, Fig. 1 and Fig. 2 are directed toward a coaxial ferrofluid seal apparatus 10 of the invention, which shows a magnetically permeable central shaft 12 surrounded by coaxial shafts 14 and 16 within a housing 18, with each shaft supported by its own bearings 20, so that each shaft 12, 14 and 16 is capable of independent rotation. As illustrated more particularly in Fig. 2, the coaxial shafts 14 and 16 are composed of three separate sections, two magnetically permeable sections 28 and 30 and a non-magnetically permeable section 26 between sections 28 and 30 and joined together to form a single shaft. Shaft 16 illustrated in Fig. 2 also represents a shaft 14 which is formed in a similar manner.

The seal apparatus 10 includes within the housing an annular axially-polarized permanent magnet 22 together with adjacent annular magnetically permeable pole pieces 24 and 32. The pole pieces 24 and 32 are statically sealed to the interior wall surface of the non-magnetically permeable housing through O-ring elastomeric seals. An annular non-magnetically permeable ring 40 magnetically insulates the magnetically permeable bearing 20 from the pole pieces 24 and 32 and the magnetically permeable shaft sections of shaft 14 and 16 are similarly isolated.

Pole pieces 24 and 32 are in general alignment with the magnetically permeable sections 28 and 30 of the coaxial shafts 14 and 16. The shafts 12, 14 and 16 contain on the exterior surface of the shaft sections 28 and 30 a plurality of separate knife-like ridges 34 and 36, so that the shafts may form a series of coaxial multiple-stage ferrofluid seals capable of a defined pressure capacity. Of course, if desired, the ridges may be formed on the end of the pole pieces 24 and 32 and magnetically permeable shaft sections 28 and 30 rather than on shafts 14 and 16.

As illustrated in Figs. 1 and 2, ferrofluid is applied to the multiple-stage of each of the shafts 12, 14 and 16 to form a plurality of multiple ferrofluid O-ring seals between the separately rotating shafts, which will provide a hermetic sealing capability for the coaxial seal apparatus. The seal apparatus 10 is generally employed for, and in connection with, a semiconductive processing unit wherein on the right hand side of Fig. 1, for example, there is a subatmospheric environment with an atmospheric environment on the left hand side of the seal with the multiple-stage of the seal designed to provide sufficient pressure capacity with a safety factor for all of the shafts.

As illustrated further, the pole pieces 24 and 32 are generally aligned with the magnetically permeable sections of the coaxial shafts 14 and 16, so that the closed loop magnetic flux path, which is shown more particularly in the upper section of Fig. 1 with arrow lines, is through the pole pieces 24 and 32, through the insulated magnetically permeable shaft sections 28 and 30 of the coaxial shafts 14 and 16 and the ferrofluid retained about each shaft with the return flux path through the magnetically permeable central shaft 12. The embodiments of Figs. 1 and 2 provide for hermetic sealing of the central and a plurality of coaxial shafts, independent rotation of the shafts with a compact design employing a single magnetic structure source, and wherein the central shaft is composed of a magnetically permeable material.

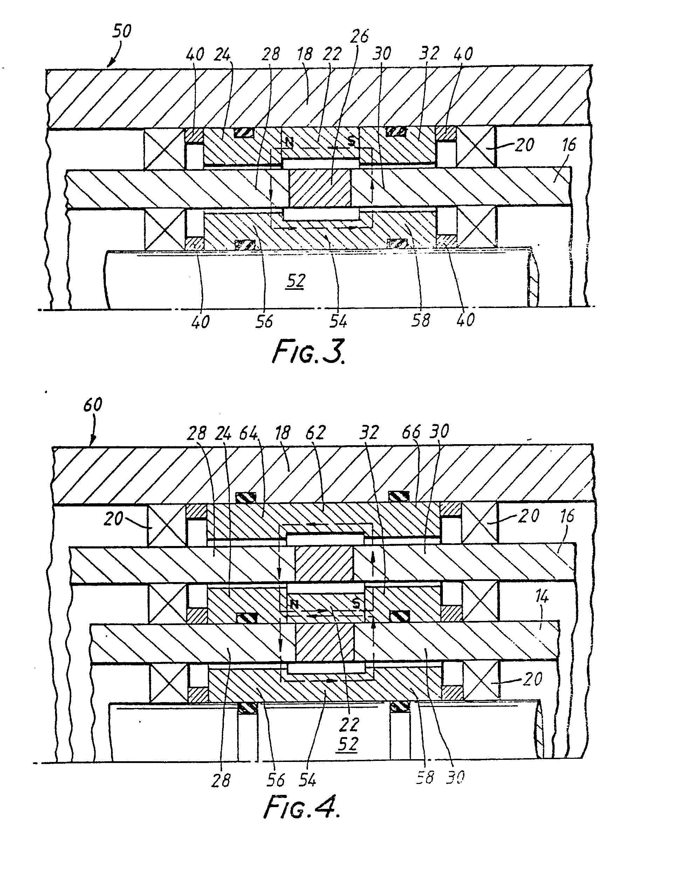

Fig. 3 illustrates another embodiment 50 of the coaxial multiple-shaft ferrofluid seal apparatus of the invention wherein the central shaft 52 is composed of a non-magnetically permeable material and wherein the central shaft is surrounded by a single coaxial shaft 16 composed as before in Fig. 2 of a non-magnetically permeable shaft section 26 with magnetically permeable sections 28 and 30 on either side thereof, and with the annular permanent magnet 22 and the annular pole pieces 24 and 32 secured and sealed to the housing 18 and with the bearings 20 separated through insulating rings 40. Secured to the non-magnetically permeable shaft 52 is a magnetically permeable annular pole block structure 54 statically sealed by O-rings to the shaft 52 and having raised sections 56 and 58 which extend into a close, non-contacting relationship with the interior surface of the coaxial shaft 16. The pole pieces 24 and 32 extend into a close, non-contacting relationship with the surface of the coaxial shaft 16 on the outside, while the extensions 56 and 58 of the pole block structure 54 extend into a close, non-contacting relationship with the interior surface of shaft 16. The pole pieces 24 and the sections 56 and 58 generally align with the magnetically permeable sections 28 and 30 of the shaft 16. Ferrofluid is disposed in the radial gap between the pole pieces 24 and the sections 56 and 58 to form a single, or preferably a multiple-stage ferrofluid hermetic O-ring seal of defined pressure capacity. The magnetic flux path extends, as illustrated by the arrow and broken lines, from the magnet 22, through the pole piece 24, the shaft section 28, and pole block section 56, and returns to the magnet through the pole piece section 58, shaft section 30 and pole piece 32. In this embodiment a single magnetic source is used to provide a coaxial ferrofluid seal apparatus wherein the central shaft is composed of a non-magnetically permeable material by the employment of a magnetically permeable pole block to provide for a return path for the magnetic flux from the single annular magnet.

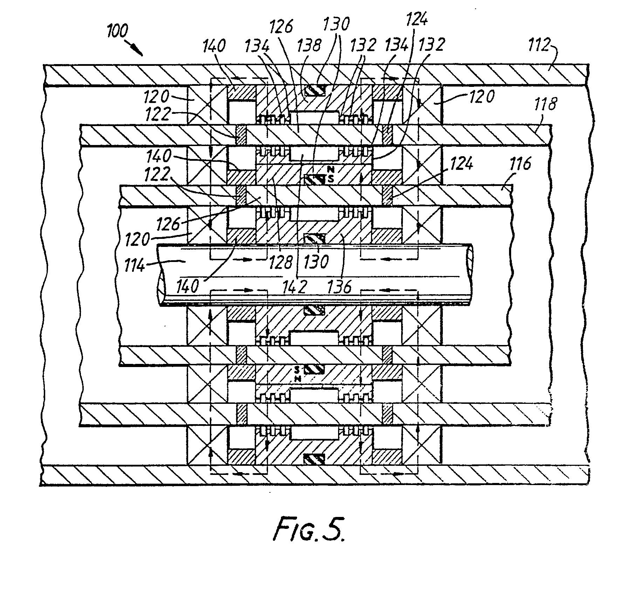

Fig. 4 is an illustration of another embodiment 60 of the multiple, coaxial ferrofluid seal apparatus of the invention wherein there is a non-magnetically permeable central shaft 52 surrounded by coaxial shafts 14 and 16 and wherein the sole magnet apparatus to provide for magnetic flux for all of the ferrofluid seals within the coaxial shaft apparatus is not positioned on the non-magnetically permeable housing, but rather directly on a rotatable coaxial shaft 14. In the apparatus 60 of the pole block 54 is secured by static seals to the central shaft and has legs 56 and 58. The pole block has an annular U-shaped cross section and is composed of a magnetically permeable material to provide for return flux path. Another pole block 62 is statically sealed through elastomeric O-ring seals to the interior wall of the housing 18, has legs 64 and 66, and is also composed of magnetically permeable material. The magnet 22 and pole pieces 24 and 32 are statically sealed through O-rings to the surface of shaft 14. All the coaxial shafts as before are supported by bearings 120 which, if magnetically permeable, as illustrated, are insulated through annular rings 40 from the magnetic flux path. The legs 56, 58, 64 and 66 of the pole block structures are generally aligned with the magnetically permeable sections 28 and 30 of coaxial shafts 14 and 16. The pole pieces 32 and 24 and legs 56, 58 and 64, 66 generally extend into a close, non-contacting relationship with the surfaces of shafts 14 and 16 and ferrofluid is retained within these radial gaps so formed, e.g. 2 to 6 mils, to provide for multiple-stage ferrofluid sealing. As illustrated more particularly by the arrowed lines, the flux path travels from the magnet 22 into the pole piece 24 where it splits into two loops, the first flowing outward through shaft section 28, pole piece sections 64 and 66 and returning through shaft section 30 into pole block 32, and the second flowing inward through shaft section 28, pole block sections 56 and 58 and returning through shaft section 30 into pole block 32, rejoining the first loop and continuing into the magnet, wherein the central shaft 52 and the housing 18 are composed of a non-magnetically permeable material. In this instance, the sole magnetic source structure 22 rotates with coaxial shaft 14.

Fig. 5 is an illustration of another embodiment 100 of a coaxial ferrofluid seal apparatus of the invention, which shows a magnetically permeable central shaft 114 surrounded by magnetically permeable coaxial shafts 116 and 118 within a magnetically permeable housing 112, with each shaft supported by a pair of magnetically permeable ball bearings 120, so that each shaft 114, 116 and 118 is independently rotatable in either direction and at any chosen speed.

The coaxial shafts 116 and 118 are characterized by a pair of magnetically insulating shaft inserts or sections 122 and 124 of a non-magnetically permeable material to define a central magnetically permeable shaft section 126 in between. Coaxial shaft 116 includes a radially polarized permanent magnet 128 statically secured and sealed by an O-ring seal 130 to the outer surface of the shaft 116 and includes a magnetically permeable thin annular sleeve 142 secured to the free pole piece with dual raised elements on each side having a plurality of spaced apart raised ridges 132 thereon which extend into a close, non-contacting relationship to form radial gaps, e.g. 2 to 6 mils, with the inner wall surface of coaxial shaft 118. Ferrofluid 134 in the radial gaps forms a plurality of separate O-ring seals within the inner wall surface of the coaxial shaft 118. Pole block structures 136 and 138 composed of a magnetically permeable material are statically secured by elastometic O-ring seals 130 to and about the outer surface of the central shaft 114, and the inner wall of housing 112. The pole block structures have raised pole piece ends like the sleeve 142 to form with ridges 132 a plurality of separate radial gaps filled with ferrofluid 134 to form a plurality of ferrofluid O-ring seals with the inner wall surface of coaxial shaft 116 and with the outer surface of shaft 118. Annular non-magnetically permeable spacers 140 are placed adjacent to the bearings 120 to insulate magnetically the bearings 120. The coaxial shaft inserts 122 are positioned between the bearings 120 and the permanent magnet 128 and the pole blocks 136 and 138.

The seal apparatus 100 is a compact seal apparatus which has a single source of magnetic flux. The two magnetic flux paths on either side of the single permanent magnet are illustrated by the arrowed broken lines of the Figure. Ferrofluid, i.e. ferro lubricant, is used in the bearings 120. This embodiment has been illustrated with the use of two coaxial shafts about a central shaft; however, it is applicable to a plurality of coaxial shafts.

As illustrated by the embodiments of the invention described with reference to the accompanying drawings, effective hermetic ferrofluid sealing of the rotary motion of two or more coaxial shafts is provided with independent rotations of the shafts together with a compact design employing a single magnetic structure both with magnetically permeable and non-magnetically permeable central shafts. The multiple, coaxial shaft ferrofluid seal apparatus provides for reduced wear on the sealing elements, employs a single magnetic structure, and provides for long seal life and a compact design.

**Claims**

1. A coaxial, multiple-shaft ferrofluid seal apparatus comprising a housing (18; 112), within the housing (18; 112) a plurality of coaxial elements (12; 52; 114; 14; 16; 118) of which one is a central drive shaft element (12; 52; 114) and the other or others (14; 16; 116; 118) of which extend about the central drive shaft element (12; 52; 114), and a single magnet means (22; 128) providing for at least one ferrofluid O-ring seal extending about each one of the coaxial elements (12; 52; 114; 14; 16; 118) and sealing a radial gap defined at the radially inward side by the element characterised in that said other (16) of said coaxial elements or each of said others (14; 16; 116; 118) of said coaxial elements is a drive shaft element (14; 16; 116; 118) capable of transmitting a drive independently of said central drive shaft element (12; 52; 114) and any other of said drive shaft elements (14; 16; 116; 118).

2. A seal apparatus as claimed in claim 1 in which said other (16) or others (14; 16) of said coaxial drive shaft element or drive shaft elements each has a non-magnetically permeable insulating shaft section (26; 124) and a first and second magnetically permeable section (28, 30) on either side of the non-magnetically permeable section (26), the first and second sections (28, 30) of the coaxial drive shaft elements or drive shaft elements (16; 16, 14) having surfaces which extend into a close, non-contacting relationship with the surface of an adjacent drive shaft element (12; 12, 14) to form radial gaps for ferrofluid O-ring seals therebetween.

3. A seal apparatus as claimed in claim 2, in which the housing (18) comprises a non-magnetically permeable housing and includes an interior wall surface and wherein the single magnet means (22) is secured and sealed to the interior wall surface of the housing (18).

4. A seal apparatus as claimed in claim 2 in which the single permanent magnet means (22) is secured and sealed to the surface of said other (16) or one of said others (14, 16) of said coaxial drive shaft element or elements.

5. A seal apparatus as claimed in claim 4 in which the housing (18) comprises a non-magnetically permeable material and the interior wall surface of the housing includes a magnetically permeable pole block means (62) providing a return flux path for the magnetic flux from the single magnet means (22).

6. A seal apparatus as claimed in any preceding claim in which the central drive shaft element (12; 114) comprises a magnetically permeable material providing a return flux path for the magnetic flux from the single magnet means (22; 128).

7. A seal apparatus as claimed in any preceding claim 1 to 5 in which the central drive shaft element (52) comprises a non-magnetically permeable material, the apparatus further including a magnetically permeable pole block structural means (54) secured and sealed to the central drive shaft element (52) and providing a return flux path for the magnetic flux from the single magnet means (22).

8. A seal apparatus as claimed in any preceding claim in which the single magnet means comprises:

an axially polarized, annular permanent magnet (22) and

first and second pole piece elements (24, 32), the first pole piece element (24) having one end disposed adjacent to one end of the permanent magnet (22) and the second pole piece element (32) having one end disposed adjacent to the other end of the permanent magnet (22), the first and second pole piece elements (24, 32) extending into a close, non-contacting relationship with the surface of at least one adjacent drive shaft element (16) to form radial gaps for ferrofluid O-ring seals therebetween.

9. A seal apparatus as claimed in claim 8 when claim 8 is directly or indirectly dependent on claim 2 in which the non-magnetically permeable insulating shaft section (26) or each of the non-magnetically permeable insulating shaft sections (26) is or are generally of the same axial length as the annular permanent magnet (22), and the magnetically permeable first and second shaft sections (28, 30) extend generally the axial length of the first and second pole pieces (24, 32).

10. A seal apparatus as claimed in any preceding claim in which each of the radial gaps provides for a series of separate, multiple-stage ferrofluid O-ring seals so as to provide a defined pressure capacity through the seal apparatus.

11. A seal apparatus as claimed in claim 1 comprising at least three coaxial drive shaft elements (114, 116, 118) and in which the central drive shaft element (114) comprises a magnetically permeable material, and the single magnet means (128) is radially polarized, the apparatus further including

a thin magnetically permeable annular sleeve means (132) secured to one radially polarized surface of the permanent magnet (128) to form one or more radial gaps with a surface of a coaxial drive shaft element (118) for ferrofluid O-ring seals therebetween,

pole block means (136, 138) comprising a magnetically permeable block element (136; 138) which includes at least one raised pole piece forming a radial gap with a surface of a coaxial drive shaft element (116; 118) for a ferrofluid O-ring seal therebetween, the first pole block means (138) being secured to the housing (112) and the second pole block means (136) being secured to the central drive shaft element (114),

a magnetically permeable bearing means (120) for each drive shaft and supporting the central and other coaxial drive shaft elements (114, 116, 118), the magnetically permeable bearing means (120) being disposed on one side of the single magnet means (128),

non-magnetically permeable annular insulating means (140) insulating magnetically each of the magnetically permeable bearing means (120) from the single magnet means (128) and each of the pole piece means (136, 138), the insulating means (140) being radially aligned with non-magnetically permeable insulating drive shaft sections (124) of said other coaxial drive shaft elements (116, 118) disposed between magnetically permeable shaft sections of said other coaxial drive shaft elements (116, 118) whereby the magnetic flux from the radially polarized single magnet means (128) passes in a closed circuit through the housing (112), the magnetically permeable bearing means (120), the central shaft (114), the pole piece means (136, 138), the sleeve means (132), magnetically permeable drive shaft sections of the other coaxial shaft elements (116, 118), the ferrofluid in the radial gaps and the single magnet means (128).

12. A seal apparatus as claimed in claim 11 which includes first and second magnetically permeable bearing means (120) for each drive shaft element (114, 116, 118) on either side of the single magnet means (126), pole piece means (136, 138) and non-magnetically permeable insulating shaft sections (124) of said other coaxial drive shaft elements providing two separate closed-loop magnetic flux circuits from the single magnet means (128).

13. A seal apparatus as claimed in claim 12 in which the pole piece means (136, 138) and the sleeve means (132) include two spaced apart raised pole pieces each having a plurality of edges (132) forming a plurality of radial gaps for ferrofluid O-ring seals under each pole piece.

14. A seal apparatus of claim 11, 12 or 13 wherein the single magnet means (128) is statically sealed and secured to an outer surface of a said other coaxial drive shaft element (116).

15. A seal apparatus as claimed in claim 11, 12, 13 or 14 in which one of the pole block means (138) is sealed and secured to an inner surface of the housing (112) to form one or more radial gaps with an outer wall surface of the largest diameter coaxial drive shaft element (118) for ferrofluid O-ring seals therebetween.

16. A seal apparatus as claimed in any one of claims 11 to 15 in which one of the pole block means (136) is sealed and secured to the outer surface of the central shaft (114) element to form one or more radial gaps with an inner wall surface of the smallest diameter of said other coaxial drive shaft element (116) for ferrofluid O-ring seals therebetween.

17. A seal apparatus as claimed in any one of claims 11 to 16 in which the insulating means (140) and the non-magnetically permeable shaft sections (124) are radially aligned to insulate magnetically the magnetically permeable bearing means (120).

**Patentansprüche**

1. Mittels Ferrofluid dichtende Einrichtung für mehrere koaxiale Wellen, bestehend aus einem Gehäuse (18; 112), mehreren koaxialen Elementen (12; 52; 114; 14; 16; 118) im Gehäuse (18; 112), von denen eines ein zentrales Antriebswellenelement (12; 52; 114) ist und das andere oder die anderen (14; 16; 116; 118) sich um das zentrale Antriebswellenelement (12; 52; 114) erstreckt bzw. erstrecken, und einer Einzelmagneteinrichtung (22; 128) zur Bildung zumindest einer Ferrofluid-O-Ringdichtung, die sich um jedes der koaxialen Elemente (12; 52; 114; 14; 16; 118) erstreckt und einen an der radial nach innen gelegenen Seite von dem Element begrenzten radialen Spalt abdichtet, dadurch gekennzeichnet, daß das andere (16) der koaxialen Elemente oder jedes der anderen koaxialen Elemente (14; 16; 116; 118) ein antriebswellenelement (14; 16; 116; 118) ist, das in der Lage ist, einen Antrieb unabhängig von dem zentralen Antriebswellenelement (12; 52; 114) und jedem anderen der Antriebswellenelemente (14; 16; 116; 118) zu übertragen.

2. Dichtungseinrichtung nach Anspruch 1, bei der das andere koaxiale Antriebswellenelement (16) oder die anderen Antriebswellenelemente (14; 16) jeweils einen nicht magnetisch durchlässigen Isolierungswellenabschnitt (26; 124) und einen ersten und einen zweiten magnetisch durchlässigen Abschnitt (28, 30) zu beiden Seiten des nicht magnetisch durchlässigen Abschnitts (26) besitzen, wobei der erste und der zweite Abschnitt (28, 30) des koaxialen Antriebswellenelements oder der Antriebswellenelemente (16; 16, 14) Oberflächen aufweisen, die in einem engen, berührungsfreien Verhältnis mit der Oberfläche eines benachbarten Antriebswellenelements (12; 12, 14) zur Bildung radialer Spalte für Ferrofluid-O-Ringdichtungen zwischen diesen stehen.

3. Dichtungseinrichtung nach Anspruch 2, bei der das Gehäuse (18) ein nicht magnetisch durchlässiges Gehäuse umfaßt sowie eine Innenwandfläche aufweist und wobei die Einzelmagneteinrichtung (22) an der Innenwandfläche des Gehäuses (18) festgelegt und abgedichtet ist.

4. Dichtungeinrichtung nach Anspruch 2, bei der die Einzeldauermagneteinrichtung (22) an der Oberfläche des anderen koaxialen Antriebswellenelements (16) oder eines der anderen Antriebswellenelemente (14, 16) festgelegt und abgedichtet ist.

5. Dichtungseinrichtung nach Anspruch 4, bei der das Gehäuse (18) ein nicht magnetisch durchlässiges Material umfaßt und die Innenwandfläche des Gehäuses eine magnetisch durchlässige Polblockeinrichtung (62) aufweist, die einen Rückflußweg für den Magnetfluß von der Einzelmagneteinrichtung (22) darbietet.

6. Dichtungseinrichtung nach einem der vorhergehenden Ansprüche, bei der das zentrale Antriebswellenelement (12; 114) ein magnetisch durchlässiges Material umfaßt, das einen Rückflußweg für den Magnetfluß von der Einzelmagneteinrichtung (22; 128) darbietet.

7. Dichtungseinrichtung nach einem der Ansprüche 1 bis 5, bei der das zentrale Antriebswellenelement (52) ein nicht magnetisch durchlässiges Material umfaßt, wobei die Einrichtung ferner ein magnetisch durchlässiges Polblockbauteil (54) aufweist, dam am zentralen Antriebswellenelement (52) festgelegt und abgedichtet ist und einen Rückflußweg für den Magnetfluß von der Einzelmagneteinrichtung (22) darbietet.

8. Dichtungseinrichtung nach einem der vorhergehenden Ansprüche, bei der die Einzelmagneteinrichtung folgende Elemente umfaßt:
einen axial polarisierten, ringförmigen Dauermagneten (22) und
ein erstes und ein zweites Polteilelement (24, 32), von denen das erste Polteilelement (24) mit einem Ende an das eine Ende des Dauermagneten (22) und das zweite Polteilelement (32) mit einem Ende an das andere Ende des Dauermagneten (22) angrenzt, und das erste und das zweite Polteilelement (24, 32) in einem engen, berührungsfreien Verhältnis zu der Oberfläche zumindest eines angrenzenden Antriebswellenelements (16) zur Bildung radialer Spalte für Ferrofluid-O-Ringdichtungen zwischen diesen stehen.

9. Dichtungseinrichtung nach Anspruch 8 soweit Anspruch 8 direkt oder indirekt von Anspruch 2, abhängig ist, bei der der nicht magnetisch durchlässige Isolierungswellenabschnitt (26) oder jeder der nicht magnetisch durchlässigen Isolierungswellenabschnitte (26) im allgemeinen die gleiche axiale Länge wie der ringförmige Dauermagnet (22) aufweist und der erste und der zweite magnetisch durchlässige Wellenabschnitt (28, 30) sich im allgemeinen über die axiale Länge des ersten und des zweiten Polteils (24, 32) erstrecken.

10. Dichtungseinrichtung nach einem der vorhergehenden Ansprüche, bei der jeder der radialen Spalte eine Serie gesonderter, mehrstufiger Ferrofluid-O-Ringdichtungen zur Bildung eines definierten Druckvermögens durch die Dichtungseinrichtung vorsieht.

11. Dichtungseinrichtung nach Anspruch 1, bestehend aus zumindest drei koaxialen Antriebswellenelementen (114, 116, 118), bei der das zentrale Antriebswellenelemente (114) ein magnetisch durchlässiges Material umfaßt und die Einzelmagneteinrichtung (128) radial polarisiert ist, wobei die Einrichtung folgende weitere Merkmale umfaßt:

eine dünne magnetisch durchlässige ringförmige Hülseneinrichtung (132), die an einer radial polarisierten Oberfläche des Dauermagneten (128) zur Bildung eines oder mehrerer radialer Spalte mit einer Oberfläche eines koaxialen Antriebswellenelements (118) für Ferrofluid-O-Ringdichtungen zwischen diesen festgelegt ist,

Polblockeinrichtungen (136, 138) mit einem magnetisch durchlässigen Blockelement (136, 138), das zumindest ein erhabenes Polteil aufweist, das einen radialen Spalt mit einer Oberfläche eines koaxialen Antriebswellenelements (116; 118) für eine Ferrofluid-O-Ringdichtung zwischen diesen bildet, wobei die erste Polblockeinrichtung (138) am Gehäuse (112) und die zweite Polblockeinrichtung (136) am zentralen Antriebswellenelement (114) festgelegt ist,

eine magnetisch durchlässige Lagereinrichtung (120) für jede Antriebswelle, die das zentrale und die anderen koaxialen Antriebswellenelemente (114, 116, 118) abstützt, wobei die magnetisch durchlässige Lagereinrichtung (120) auf einer Seite der Einzelmagneteinrichtung (128) angeordnet ist,

eine nicht magnetisch durchlässige ringförmige Isolierungseinrichtung (140), die jede der magnetisch durchlässigen Lagereinrichtungen (120) von der Einzelmagneteinrichtung (128) und jeder der Polteileinrichtungen (136, 138) magnetisch isoliert, wobei die Isoliereinrichtung (140) radial mit nicht magnetisch durchlässigen Isolierungsantriebswellenabschnitten (124) der anderen koaxialen Antriebswellenelemente (116, 118) ausgerichtet ist, die zwischen magnetisch durchlässigen Wellenabschnitten der anderen koaxialen Antriebswellenelemente (116, 118) angeordnet sind, wodurch der Magnetfluß von der radial polarisierten Einzelmagneteinrichtung (128) in einem geschlossenen Kreislauf durch das Gehäuse (112), die magnetisch durchlässige Lagereinrichtung (120), die zentrale Welle (114), die Polteileinrichtungen (136, 138), die Hülseneinrichtung (132), magnetisch durchlässige Antriebswellenabschnitte der anderen koaxialen Wellenelemente (116, 118), das Ferrofluid in den radialen Spalten und die Einzelmagneteinrichtung (128) läuft.

12. Dichtungseinrichtung nach Anspruch 11, mit einer ersten und einer zweiten magnetisch durchlässigen Lagereinrichtung (120) für jedes Antriebswellenelement (114, 116, 118) auf beiden Seiten der Einzelmagneteinrichtung (126), der Polteileinrichtungen (136, 138) und der nicht magnetisch durchlässigen Isolierungswellenabschnitte (124) der anderen koaxialen Antriebswellenelemente, wobei zwei gesonderte geschlossene Magnetflußkreisläufe von der Einzelmagneteinrichtung (128) gebildet sind.

13. Dichtungseinrichtung nach Anspruch 12, bei der die Polteileinrichtungen (136, 138) und die Hülseneinrichtung (132) zwei mit Abstand voneinander angeordnete erhabene Polteile mit jeweils mehreren Kanten (132) aufweisen, die mehrere radiale Spalte für Ferrofluid-O-Ringdichtungen unter jedem Polteil bilden.

14. Dichtungseinrichtung nach Anspruch 11, 12 oder 13, bei dem die Einzelmagneteinrichtung (128) statisch abgedichtet und an einer äußeren Oberfläche des anderen koaxialen Antriebswellenelements (116) festgelegt ist.

15. Dichtungseinrichtung nach Anspruch 11, 12, 13 oder 14, bei der eine der Polblockeinrichtungen (138) an einer inneren Oberfläche des Gehäuses (112) zur Bildung eines oder mehrer radialer Spalte mit einer äußeren Wandoberfläche des koaxialen Antriebswellenelements (118) mit dem größten Durchmesser für Ferrofluid-O-Ringdichtungen zwischen diesen abgedichtet und festgelegt ist.

16. Dichtungseinrichtung nach einem der Ansprüche 11 bis 15, bei der eine der Polblockeinrichtungen (136) an der äußeren Oberfläche des zentralen Wellenelements (114) zur Bildung eines oder mehrerer radialer Spalte mit einer inneren Wandoberfläche des kleinsten Durchmessers des anderen koaxialen Antriebswellenelements (116) für Ferrofluid-O-Ringdichtungen zwischen diesen abgedichtet und festgelegt ist.

17. Dichtungseinrichtung nach einem der Ansprüche 11 bis 16, bei der die Isoliereinrichtung (140) und die nicht magnetisch durchlässigen Wellenabschnitte (124) zur magnetischen Isolierung der magnetische durchlässigen Lagereinrichtungen (120) radial ausgerichtet sind.

**Revendications**

1. Appareil d'étanchéité ferrofluidique pour plusieurs arbres coaxiaux comprenant un carter (18; 112), une pluralité d'éléments coaxiaux (12; 52; 114; 14; 16; 118) dont l'un est un élément d'arbre d'entraînement central (12; 52; 114) et l'autre ou les autres (14; 16; 116; 118) s'étendent autour de l'élément d'arbre d'entraînement central (12; 52; 114) et un aimant unique (22; 118) produisant au moins un joint d'étanchéité annulaire ferrofluidique s'étendant autour de chacun des éléments coaxiaux (12; 52; 114; 14; 16; 118) et étanchant un intervalle radial défini, du côté interne dans le sens radial, par un élément, caractérisé en ce que l'autre élément (16) parmi les éléments coaxiaux ou chacun des autres éléments (14; 16; 116; 118) des éléments coaxiaux est un élément d'arbre d'entraînement (14; 16; 116; 118) capable de transmettre un entraînement indépendamment de l'élément d'arbre d'entraînement central (12; 52; 114) et de n'importe lequel des autres éléments d'arbre d'entraînement (14; 16; 116; 118).

2. Appareil d'étanchéité suivant la revendication 1 caractérisé en ce que l'autre élément d'arbre d'entraînement coaxial (16), ou les autres éléments d'arbre d'entraînement coaxiaux (14; 16), comportent chacun une section d'arbre (26; 124) isolante, non perméable magnétiquement, et des première et seconde sections (28, 30) perméables magnétiquement, situées respectivement des deux côtés de la section non perméable magnétiquement (26), les première et seconde sections (28, 30) de l'élément d'arbre d'entraînement coaxial ou des éléments d'arbre d'entraînement coaxiaux (16; 16, 14) présentant des surfaces qui s'étendent à proximité immédiate, sans être en contact avec elle, de la surface d'un élément d'arbre d'entraînement adjacent (12; 12, 14) afin de former entre aux des intervalles radiaux pour des joints d'étanchéité annulaires ferrofluides.

3. Appareil d'étanchéité suivant la revendication 2 caractérisé en ce que le carter (18) est constitué par un carter non-perméable magnétiquement et il comporte une surface de paroi interne, et l'aimant unique (22) est fixé et scellé d'une manière étanche à la surface de paroi interne du carter (18).

4. Appareil d'étanchéité suivant la revendication 2 caractérisé en ce que l'aimant permanent unique (22) est fixé et scellé d'une manière étanche à la surface de l'autre élément d'arbre d'entraînement coaxiale (16) ou de l'un des autres éléments d'arbre d'entraînement coaxiaux (14, 16).

5. Appareil d'étanchéité suivant la revendication 4 caractérisé en ce que le carter (18) est constitué d'un matériau non-perméable magnétiquement et la surface de la paroi interne du carter comporte un bloc polaire (62) perméable magnétiquement, constituant un circuit du flux de retour pour le flux magnétique provenant de l'aimant unique (22).

6. Appareil d'étanchéité suivant l'une quelconque des revendications précédentes caractérisé en ce que l'élément d'arbre d'entraînement central (12; 114) est constitué d'un matériau perméable magnétiquement constituant un circuit du flux de retour pour le flux magnétique provenant de l'aimant unique (22; 128).

7. Appareil d'étanchéité suivant l'une quelconque des revendications 1 à 5 caractérisé en ce que l'élément d'arbre d'entraînement central (52) est constitué d'un matériau non-perméable magnétiquement, et l'appareil comporte en outre un bloc polaire (54) perméable magnétiquement, fixé et scellé d'une manière étanche à l'élément d'arbre d'entraînement central (52), pour constituer un circuit du flux de retour pour le flux magnétique provenant de l'aimant unique (22).

8. Appareil d'étanchéité suivant l'une quelconque des revendications précédentes caractérisé en ce que l'aimant unique comprend un aimant permanent annulaire (22), à polarisation axiale, et des première et seconde pièces polaires (24, 32), la première pièce polaire (24) ayant une extrémité adjacente et une extrémité de l'aimant permanent (22) tandis que la seconde pièce polaire (32) a une de ses extrémités adjacentes, à l'autre extrémité de l'aimant permanent (22), les première et seconde pièces polaires (24, 32) s'étendant à proximité immédiate, sans être en contact avec elle, de la surface d'au moins un élément d'arbre d'entraînement adjacent (16), afin de former entre eux des intervalles radiaux pour des joints d'étanchéité annulaires ferrofluidiques.

9. Appareil d'étanchéité suivant la revendication 8 caractérisé en ce que la section d'arbre isolante (26) nonperméable magnétiquement, où chacune des sections d'arbre isolantes (26), nonperméable magnétiquement, a ou ont généralement la même longueur axiale que l'aimant permanent annulaire (22) et les première et seconde sections d'arbre (28, 30) perméable magnétiquement, s'étendent d'une manière générale sur la longueur axiale des première et seconde pièces polaires (24, 32).

10. Appareil d'étanchéité suivant l'une quelconque des revendications précédentes caractérisé en ce que chacun des intervalles radiaux produit une série de joints d'étanchéité annulaires ferrofluidiques séparés, à plusieurs étages, de manière à former une capacité de pression définie à travers l'appareil d'étanchéité.

11. Appareil d'étanchéité suivant la revendication 1 caractérisé en ce qu'il comprend au moins trois éléments d'arbre d'entraînement coaxiaux (114, 116, 118), l'élément d'arbre d'entraînement central (114) est constitué en un matériau perméable magnétiquement, le dispositif à simple aimant permanent (128) est polarisé radialement, et l'appareil comporte en outre un manchon annulaire mince (132), perméable magnétiquement, fixé à une surface, polarisée radialement, de l'aimant permanent (128), afin de former un ou plusieurs intervalles radiaux avec une surface d'un élément d'arbre d'entraînement coaxial (118), pour des joints d'étanchéité annulaires ferrofluidiques entre eux, des dispositifs formant blocs polaires (136, 138) comprenant un bloc perméable magnétiquement (136; 138) qui comporte au moins une pièce polaire en saillie formant un intervalle radial avec une surface d'un élément d'arbre d'entraînement coaxial (116; 118), pour un joint d'étanchéité annulaire ferrofluidique entre eux, le premier bloc polaire (138) étant fixé au carter (112), tandis que le second bloc polaire (136) est fixé à l'élément d'abre d'entraînement central (114), un palier (120), perméable magnétiquement, pour chaque arbre d'entraînement, ce palier supportant l'élément d'arbre d'entraînement central et les autres éléments d'arbre d'entraînement coaxiaux (114, 116, 118), le palier (120) perméable magnétiquement étant disposé d'un côté du dispositif à aimant unique (128), des moyens d'isolation annulaires (140), non-perméables magnétiques, isolant magnétiquement chacun des paliers perméables magnétiquement vis-à-vis du dispositif à aimant unique (128) et de chacune des pièces polaires (136, 138), les moyens d'isolation (140) étant alignés radialement avec des sections d'arbre d'entraînement isolantes (124) non-perméable magnétiquement, des autres éléments d'arbre d'entraînement coaxiaux (116, 118), ces sections étant disposées entre des sections d'arbre, perméables magnétiquement, des autres éléments d'arbre d'entraînement coaxiaux (116, 118), si bien que le flux magnétique provenant de chaque dispositif à aimant permanent (128), polarisé radialement, passe en circuit fermé à travers le carter (112), le palier (120) perméable magnétiquement, l'arbre central (114), les pièces polaires (136, 138), le manchon (132), les sections d'arbre d'entraînement, perméables magnétiquement, des autres éléments d'arbre d'entraînement coaxiaux (116, 118), le ferrofluide dans les intervalles radiaux et le dispositif à aimant unique (128).

12. Appareil d'étanchéité suivant la revendication 11, caractérisé en ce qu'il comporte des premier et second paliers (120), perméables magnétiquement, pour chaque élément d'arbre d'entraînement (114, 116, 118), des deux côtés du dispositif à aimant permanent unique (126), des pièces polaires (136, 138) et des sections d'arbres isolantes (124), non-perméable magnétiquement, des autres éléments d'arbre d'entraînement coaxiaux deux circuits séparés en boucle fermée pour le flux magnétique provenant du dispositif à aimant unique (128).

13. Appareil d'étanchéité suivant la revendication 12, caractérisé en ce que les pièces polaires (136, 138) et le manchon (132) comportent deux pièces polaires en saillie espacées l'une de l'autre, chacun comportant une pluralité d'arêtes (132), afin de former une pluralité d'intervalles radiaux, pour des joints d'étanchéité annulaires ferrofluidiques sous chaque pièce polaire.

14. Appareil d'étanchéité suivant l'une quelconque des revendications 11, 12 ou 13, caractérisé en ce que le dispositif à aimant permanent unique (128) est scellé et fixé statiquement à une surface externe de l'un des autres éléments d'arbre d'entraînement coaxiaux (116).

15. Appareil d'étanchéité suivant l'une quelconque des revendications 11, 12, 13 ou 14 caractérisé en ce que l'un des blocs polaires (138) est scellé et fixé à une surface interne du carter (112) afin de former un ou plusieurs intervalles radiaux avec une surface de paroi externe de l'élément d'arbre d'entraînement coaxial (118) ayant le plus grand diamètre, pour la formation entre elles de joints d'étanchéité annulaires ferrofluidiques.

16. Appareil d'étanchéité suivant l'une quelconque des revendications 11 à 15 caractérisé en ce que l'un des blocs polaires (136) est scellé et fixé à la surface externe de l'élément d'arbre central (114) afin de former un ou plusieurs intervalles radiaux avec une surface de paroi interne de l'autre élément d'arbre d'entraînement coaxial (116), ayant le plus petit diamètre, pour la formation entre elles de joints d'étanchéité annulaires ferrofluidiques.

17. Appareil d'étanchéité suivant l'une quelconque des revendications 11 à 16 caractérisé en ce que les moyens d'isolation (140) et les sections d'arbre (124) nonperméables magnétiquement sont alignés radialement afin d'isoler magnétiquement le palier (120) perméable magnétiquement.

FIG.1.

FIG.2.

Fig.3.

Fig.4.

FIG.5.

3